# EUROPÄISCHE PATENTSCHRIFT

(11) **EP 3 633 339 B1**
(45) Veröffentlichungstag und Bekanntmachung des Hinweises auf die Patenterteilung: **03.03.2021**
(21) Anmeldenummer: 18198529.2
(22) Anmeldetag: 04.10.2018
(51) Int. Cl.: G01L 5/00, B30B 15/00, B30B 15/04

(54) **PRESSE MIT KRAFTMESSDOSE**
PRESS WITH FORCE SENSOR
PRESSE AVEC CAPTEUR DE FORCE

(43) Veröffentlichungstag der Anmeldung: 08.04.2020
(73) Patentinhaber: IEF Werner GmbH, 78120 Furtwangen (DE)
(72) Erfinder: RÖSCH, Andreas, 78148 Gütenbach (DE); FRITZSCHE, Manuel, 78120 Furtwangen (DE); NEUGART, Frank, 78120 Furtwangen (DE)
(74) Vertreter: Westphal, Mussgnug & Partner Patentanwälte mbB

(56) Entgegenhaltungen:
- US-A1- 2010 028 478
- US-A1- 2013 078 330

## Beschreibung

Die Erfindung betrifft eine Presse mit einer Kraftmessdose mit den Merkmalen des Oberbegriffs des Patentanspruchs 1.

Pressen und Pressvorgänge gehören zu den Grundwerkzeugen bzw. Grundprozessen industrieller Fertigung und finden deswegen seit vielen Jahrzehnten weite Verbreitung.

Bei der Verwendung von Pressen tritt das Problem auf, dass die beim Pressvorgang auftretenden Presskräfte variieren, und zwar aus Gründen, die nicht oder nicht vollständig kontrollierbar sind. So tragen zur Variation der Presskräfte Bauteiltoleranzen und Oberflächenbeschaffenheit der individuellen Bauteile ebenso bei wie Prozessparameter, z.B. die Schmierung und die jeweilige Pressgeschwindigkeit, und Umgebungsparameter, wie Temperatur oder Feuchtigkeit. Aus diesem Grund ist oftmals eine Überwachung der wirkenden Presskräfte vorgesehen, die man häufig dadurch realisiert, dass eine Kraftmessdose in den Kraftfluss eingebaut wird.

Während solche Kraftmessdosen üblicherweise so ausgelegt sind, dass sie hohen Druckkräften widerstehen können, sind sie empfindlich gegenüber anderen Belastungen, wie z.B. Zugkräften, Querkräften und jeglichen anderen Momenten. Solche Belastungen können schlimmstenfalls die Kraftmessdose zerstören, wenn sie eine gewisse Schwelle überschreiten, die wesentlich geringer ist als die zulässige Druckbelastung; selbst wenn es (noch) nicht zu einer Zerstörung der Kraftmessdose kommt, wird jedenfalls das Messergebnis verfälscht.

Aus der US 2010/0028478 A1 ist eine Pulverpresse mit einem Pressenrahmen, der einen oberen und einen unteren Rahmenab schnitt aufweist, ein am oberen Rahmenabschnitt angebrachten oberen linearen Antrieb und einem am unteren Rahmenabschnitt angebrachten unteren Linearantrieb bekannt, bei der die Antriebe mit einem Ober- bzw. einer Unterstempelplatte bzw. einem Matrizentisch verbunden sind, wobei die Stempelplatten ein Spannsystem für einen Ober- bzw. einen Unterstempel aufweisen, einem Matrizenspannsystem an einem Matrizentisch mit einer Matrize und mindestens einer Kraftmessvorrichtung zur Messung der Presskraft an mindestens einem Stempel, wobei mindestens eine Kraftmessvorrichtung zwischen einer Stempelplatte und dem dazugehörigen Spannsystem angeordnet ist.

Die Aufgabe der Erfindung besteht daher darin, eine Presse mit einer Kraftmessdose bereitzustellen, bei der die Wahrscheinlichkeit für die Zerstörung der Kraftmessdose und/oder eine Verfälschung des mit ihr erhaltenen Messergebnisses reduziert ist. Diese Aufgabe wird gelöst durch eine Presse mit den Merkmalen des Patentanspruchs 1. Vorteilhafte Weiterbildungen der Erfindung sind Gegenstand der abhängigen Ansprüche.

Die erfindungsgemäße Presse weist einen Pressstempel und einen Amboss, der das Gegenlager zur Aufnahme der durch den Pressstempel beim Pressvorgang ausgeübten Kraft darstellt, auf. In den meisten Fällen, aber nicht zwingend, ist ein für den Pressvorgang verwendetes Unterwerkzeug auf dem Amboss angeordnet.

Erfindungswesentlich ist, dass der Amboss an mindestens einem Führungswagen befestigt ist, der an einer Führungsschiene in Pressrichtung, also in der Richtung, in der der Pressstempel zum Aufbau der Presskraft bewegt wird, beweglich geführt ist und dass der Amboss auf einer Auflagefläche aufliegt, über die in Pressrichtung wirkende Kräfte entweder direkt (wenn die Auflagefläche Bestandteil der Kraftmessdose) oder über ein - insbesondere einseitig lose- zwischen Amboss und Kraftmessdose angeordnetes, Bauteil in die Kraftmessdose eingeleitet werden. Der Amboss wird bei dieser Anordnung in Pressrichtung also durch die Kraftmessdose in Position gehalten, während er in den anderen Richtungen außer der Richtung entgegen der Pressrichtung durch Führungswagen und Führungsschiene in Position gehalten wird.

Durch die Führung des Ambosses über mindestens einen Führungswagen und Führungsschiene wird verhindert, dass Belastungen quer zur Pressrichtung, die in der Regel in der Vertikalen liegt, in die Kraftmessdose eingeleitet werden. Ebenso wenig werden Momente an die Kraftmessdose weitergeleitet, sondern ebenfalls von der Führung aufgenommen. Dementsprechend wird das Risiko einer Beschädigung oder Zerstörung der Kraftmessdose reduziert.

Bevorzugt ist, wenn der Amboss an mehr als einem Führungswagen angeordnet ist, weil dadurch die Stabilität der Führung verbessert wird. Gleichzeitig beschränkt der verfügbare Bauraum allerdings die Zahl der sinnvoll einsetzbaren Führungswagen. Als besonders bevorzugt wird daher insbesondere die Verwendung von zwei Führungswagen angesehen.

Erfindungsgemäß liegt der Amboss unbefestigt auf der Auflagefläche auf, es ist also keine Befestigung zwischen Amboss und Auflagefläche vorhanden. Auf diese Weise ist die Kraftmessdose auch falls Zugkräfte auftreten, etwa wenn sich der Pressstempel mit einem am Amboss fest angeordneten Unterwerkzeug verklemmt hat und dann nach oben bewegt wird, um einen neuen Presszyklus einzuleiten, vor diesen sicher geschützt, weil diese zu einem Abheben des Amboss von der Auflagefläche führen.

Insbesondere ist es bei einem solchen unbefestigten Aufliegen auch vorteilhaft, wenn der Auflagepunkt grundsätzlich auf der Auflagefläche wandern kann, wenn Kräfte in Richtung tangential zur Auflagefläche auf den Amboss wirken, die groß genug sind, um die Reibungskraft zwischen Amboss und Auflagefläche zu überwinden und wenn diese Kräfte nicht durch Führungsschiene und Führungswagen abgefangen werden. Dies ist insbesondere dann der Fall, wenn kein Formschluss zwischen Amboss und Auflagefläche vorhanden ist.

Gemäß einer anderen bevorzugten Weiterbildung der Erfindung ist vorgesehen, dass die Auflagefläche, auf der der Amboss aufliegt, in Richtung auf den Amboss hin (und somit von der Kraftmessdose weg) gewölbt ist. Bevorzugt liegt das Maximum der Auflagefläche relativ zur Bodenplatte der Presse, auf der die Kraftmessdose unmittelbar oder mittelbar befestigt ist, auf einer Mittelachse der Kraftmessdose. Die Konsequenz einer solchen Ausgestaltung ist, dass der Kontaktbereich, in dem der Amboss auf der Auflagefläche aufliegt, bei einem Verkippen des Ambosses nur langsam aus der Mitte der Kraftmessdose gerückt wird. Damit wird vermieden, dass die Krafteinleitung über einen Randbereich der Kraftmessdose und/oder gar eine Ecke erfolgt. Ein solches Verkippen kann trotz der Führung insbesondere dann vorkommen, wenn Presskräfte so stark werden, dass eine Verbiegung des Gestells der Presse auftritt.

Eine bevorzugte Weiterbildung dieser Ausgestaltung liegt dabei vor, wenn die vom Amboss ausgeübte Kraft über ein kugelsegmentförmiges Bauteil oder einen kugelsegmentförmigen Abschnitt eines Bauteils in die Kraftmessdose eingeleitet wird, wobei der Amboss auf der gewölbten Oberfläche des Kugelsegments aufliegt. Das Bauteil kann dabei ein integraler Bestandteil der Kraftmessdose oder ein separates Bauteil sein. Bevorzugt fallen dabei die Mittelachsen des kugelsegmentförmigen Bauteils oder Abschnitts und der Kraftmessdose zusammen.

Die Erfindung wird nachfolgend anhand von Figuren, die Ausführungsbeispiele darstellen, näher erläutert. Es zeigt:
- Fig. 1: Eine Gesamtdarstellung einer Presse mit einem Ausbruch über die besonders relevanten Bereiche,
- Fig. 2: eine Ausschnittsvergrößerung des aufgebrochenen Bereichs der Presse aus Figur 1, in dem Amboss und Kraftmessdose angeordnet sind, und
- Fig. 3: eine schematische Darstellung der Wirkung eines kugelsegmentförmigen Abschnitts als Auflage für den Amboss.

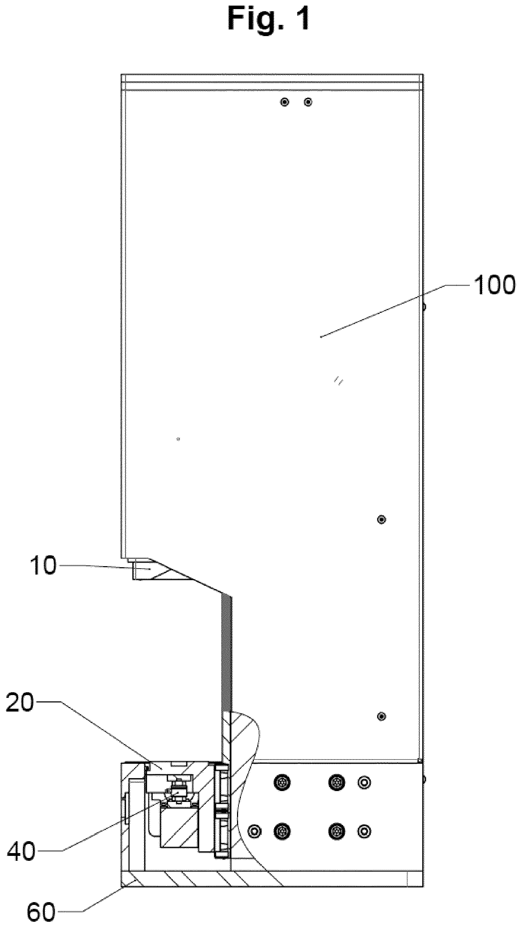

Figur 1 zeigt eine Gesamtdarstellung einer Presse 100 mit einem Pressstempel 10, einem Amboss 20, einer Kraftmessdose 40 und einer Grundplatte 60, wobei im in Figur 1 links unten angeordneten Bereich der Presse 100 die Darstellung einen Aufbruch aufweist, um den Blick auf die innerhalb der Presse 100 angeordnete Kraftmessdose 40 und auf die Anordnung bzw. Lagerung des Amboss 20 in bzw. an der Presse 100 zu erlauben.

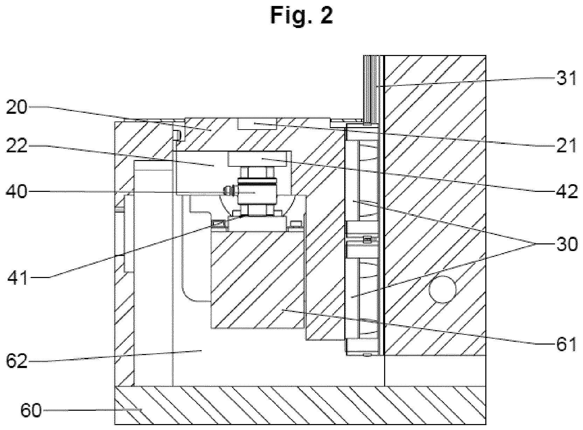

Wie man besonders gut in der Ausschnittsvergrößerung des aufgebrochenen Bereichs gemäß Figur 2 erkennt, ist die Kraftmessdose 40 mit ihrem unteren, der Grundplatte 60 der in Figur 1 vollständig dargestellten Presse 100 zugewandten Boden 41 auf einem Trägerblock 61 abgestützt, der an Seitenwänden 62 der Presse 100 gelagert ist.

Ferner entnimmt man insbesondere der Figur 2, dass der Amboss 20 an zwei Führungswägen 30 befestigt ist, die jeweils auf einer parallel zur Pressrichtung, senkrecht zur Grundplatte 60 der Presse verlaufenden Führungsschiene 31 geführt sind. Abgesehen von einem etwaig verbleibenden Spiel zwischen den Führungswägen 30 und Führungsschiene 31 ist somit der Amboss 20 nur noch in und gegen die Pressrichtung bewegbar. Dabei ist es ausreichend, wenn diese Bewegung auf den für die Kraftmessung benötigten Messweg, der im 1/100 mm Bereich liegen kann, beschränkt ist.

Der Amboss 20 weist an seiner dem Pressstempel 10 zugewandten Oberseite eine Aufnahme 21 zur Anordnung eines nicht gezeigten Unterwerkzeugs auf. An seiner der Grundplatte 60 der Presse 100 zugewandten Unterseite ist eine Ausnehmung 22 angeordnet, in die ein Deckel 42 der Kraftmessdose 40 mit seitlichem Spiel hineinragt, auf dem der Amboss 20 mit dem Grund der Ausnehmung 22 aufliegt, so dass der Amboss 20 durch die Kraftmessdose 40 abgestützt wird und dementsprechend eine Messung der Presskraft möglich ist.

Bedingt durch das seitliche Spiel werden, falls die Führung durch die Führungswägen 30 und die Führungsschiene 31 in Richtung senkrecht zur Pressrichtung wirkende Kräfte und/oder Momente nicht aufgenommen haben sollte, solche Kräfte nicht in die Kraftmessdose 40 eingeleitet, sondern führen lediglich zu einem Wandern der Kontaktfläche zwischen Kraftmessdose 40 und Amboss 20 auf dem Grund der Ausnehmung 22.

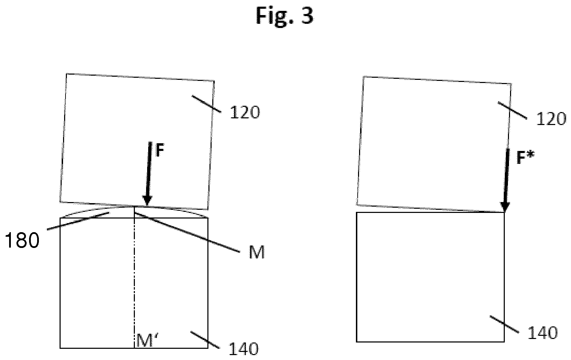

Während in dem in den Figuren 1 und 2 gezeigten Beispiel die ebene Oberfläche des Deckels 42 der Kraftmessdose 40 am Grund der Ausnehmung 22 anliegt und die Kontaktfläche bildet, ist in einer anderen vorteilhaften Ausführungsform, die schematisch im linken Teil der Figur 3 dargestellt ist, vorgesehen, dass die Krafteinleitung in die Kraftmessdose 140 durch einen Amboss 120, der -was in Figur 3 nicht gezeigt ist- ebenso wie in Figur 1 und 2 gezeigt mit Führungsschlitten und Führungsschiene gelagert ist, über einen kugelsegmentförmigen Abschnitt 180, dessen dem in Figur 3 nicht dargestellten Pressstempel 10 zugewandte Oberseite an einer Oberfläche des Amboss 120 anliegt, erfolgt.

Dabei ist der kugelsegmentförmige Abschnitt so angeordnet, dass die durch seine Symmetrieachse gebildete Mittelachse M des kugelsegmentförmigen Abschnitts 180 mit der Mittelachse M' der Kraftmessdose 140 zusammenfällt.

Dieser kugelsegmentförmige Abschnitt 180 kann dabei ein Abschnitt eines Deckels der in Figur 3 nur schematisch dargestellten Kraftmessdose 140 sein, er kann aber auch als zusätzliches, zwischen Kraftmessdose 140 und Amboss 120 angeordnetes separates Bauteil oder als ein Abschnitt eines solchen Bauteils ausgeführt werden.

Diese Maßnahme wirkt sich positiv auf die Auswirkungen einer etwaig -insbesondere bei sehr hohen Presskräften, die zu einer Verbiegung des Gestells der Presse führen- auftretenden Verkippung des Ambosses 120 auf, wie man bei einem Vergleich der jeweils durch Pfeile angedeuteten Krafteinleitung in die Kraftmessdose 140 bei der links in Figur 3 dargestellten Konstellation mit der rechts in Figur 3 dargestellten Konstellation erkennt. Mit dem kugelsegmentförmigen Abschnitt 180 führt eine solche Verkippung, wie die linke Hälfte der Figur 3 zeigt, lediglich zu einem leichten Wandern der Krafteinleitung; ohne diesen führt dieselbe Verkippung zu einer Krafteinleitung am Rand der Kraftmessdose 140, die das Messergebnis signifikant stärker negativ beeinflusst.

### Bezugszeichenliste

- 10: Pressstempel
- 20, 120: Amboss
- 21: Aufnahme
- 22: Ausnehmung
- 30: Führungswagen
- 31: Führungsschiene
- 40, 140: Kraftmessdose
- 41: Boden
- 42: Deckel
- 60: Grundplatte
- 61: Trägerblock
- 62: Seitenwand
- 100: Presse
- 180: kugelsegmentförmiger Abschnitt
- M, M': Mittelachse

## Patentansprüche

1. Presse (100) mit einem Presstempel (10), mit einem Amboss (20, 120) zur Aufnahme der durch den Pressstempel (10) beim Pressvorgang ausgeübten Kraft und mit einer Kraftmessdose (40, 140) zur Messung der während des Pressvorgangs ausgeübten Kraft,
wobei die Kraftmessdose (40) mit ihrem unteren Boden (41), welcher einer Grundplatte (60) der Presse (100) zugewandt ist, auf einem Trägerblock (61) abgestützt ist, der an Seitenwänden (62) der Presse (100) gelagert ist, wobei der Amboss (20, 120) an mindestens einem Führungswagen (30) befestigt ist, der an einer Führungsschiene (31) in Pressrichtung beweglich geführt ist und dass der Amboss (20, 120) auf einer Auflagefläche aufliegt, über die in Pressrichtung wirkende Kräfte entweder direkt oder über ein zwischen Amboss (20, 120) und Kraftmessdose (40, 140) angeordnetes Bauteil in die Kraftmessdose eingeleitet werden, **dadurch gekennzeichnet, dass** der Amboss (20, 120) unbefestigt auf der Auflagefläche aufliegt.

2. Presse (100) nach Anspruch 1, **dadurch gekennzeichnet, dass** die Auflagefläche, auf der der Amboss (20, 120) aufliegt, in Richtung auf den Amboss (20, 120) hin gewölbt ist.

3. Presse (100) nach Anspruch 2, **dadurch gekennzeichnet, dass** die vom Amboss (20, 120) ausgeübte Kraft über ein kugelsegmentförmiges Bauteil oder einen kugelsegmentförmigen Abschnitt (180) eines Bauteils in die Kraftmessdose (40, 140) eingeleitet wird, wobei der Amboss (20, 120) auf der gewölbten Oberfläche des Kugelsegments aufliegt.

## Claims

1. Press (100) with a press ram (10), with an anvil (20, 120) for absorbing the force generated by the press ram (10) during the pressing process and with a load cell (40, 140) for measuring the force generated during the pressing process,
wherein the bottom side (41) of the load cell (40) faces a base plate (60) and is supported by a carrier block (61) that is mounted on the side walls (62) of the press (100),
wherein the anvil (20, 120) is attached to at least one guide carriage (30) that is moveably guided along a guide track (31) in the pressing direction and in that the anvil (20, 120) rests on a support surface, via which the forces that are effective in the pressing direction are either directly introduced into the load cell (40, 140) or indirectly through a component arranged between the anvil (20, 120) and the load cell (40, 140),
**characterized in that** the anvil (20, 120) rests unattached on the support surface.

2. Press (100) in accordance with claim 1,
**characterized in that** the support surface on which the anvil (20, 120) rests is convex in the direction of the anvil (20, 120).

3. Press (100) in accordance with claim 2,
**characterized in that** the force generated by the anvil (20, 120) is introduced into the load cell (40, 140) via a component in the form of a spherical segment or via a section of a component in the form of a spherical segment (180), wherein the anvil (20, 120) rests on the convex upper surface of the spherical segment.

## Revendications

1. Presse (100) comprenant un piston de presse (10), une enclume (20, 120) pour recevoir la force exercée lors de l'opération de compression par le piston de presse (10) ainsi qu'une capsule dynamométrique (40, 140) pour mesurer la force exercée pendant l'opération de compression,
- la capsule dynamométrique (40) s'appuyant par son fond (41) tourné vers la plaque de base (60) de la presse (100), contre un billot (61) monté sur les parois latérales (62) de la presse (100),
- l'enclume (20, 120) étant fixée à au moins un chariot (30) conduit sur des rails de guidage (31) dans la direction de compression, et
- l'enclume (20, 120) s'appuie sur une surface d'appui qui transmet les efforts exercés dans la direction de compression soit directement dans la capsule dynamométrique, soit par une pièce installée entre l'enclume (20, 120) et la capsule dynamométrique (40, 140),
presse **caractérisée en ce que**
l'enclume (20, 120) s'appuie sur la surface d'appui sans être fixée.

2. Presse (100) selon la revendication 1,
**caractérisée en ce que**
la surface d'appui sur laquelle repose l'enclume (20, 120) est bombée en direction de l'enclume (20, 120).

3. Presse (100) selon la revendication 2,
**caractérisée en ce que**
la force exercée par l'enclume (20, 120) est transmise dans la capsule dynamométrique (40, 140) par une pièce en forme de segment de sphère ou d'une partie (180) en forme de segment de sphère d'une pièce,
l'enclume (20, 120) reposant sur la surface bombée du segment de sphère.
